# EUROPÄISCHE PATENTANMELDUNG

(11) **EP 0 530 550 A1**
(43) Veröffentlichungstag der Anmeldung: **10.03.1993**
(21) Anmeldenummer: 92113677.6
(22) Anmeldetag: 11.08.1992
(51) Int. Cl.: G01D 5/245

(54) **Vorrichtung zur Winkellagebestimmung einer Lastwelle mit einem Mess- und einem Nachlaufzahnrad**

(30) Priorität: 26.08.1991 DE 9110524 U
(71) Anmelder: SIEMENS AKTIENGESELLSCHAFT, D-80333 München (DE)
(72) Erfinder: Ollert, Udo, Dipl. -Ing. (FH), W-8535 Emskirchen (DE)

(57) **Zusammenfassung**

Die Vorrichtung weist ein Meßzahnrad (MZ) mit einem ersten Zahnkranz (Z1) und einer ersten Nullmarke (N1) auf, welches verdrehsicher mit der Lastwelle (W) verbunden ist. Ein Nachlaufzahnrad (NZ) mit zweitem Zahnkranz (Z2), einer zweiten Nullmarke (N2) und einem ersten Sensorsystem (S1) ist über einen Servoantrieb (E,R) frei drehbar. Bei Vorbeilaufen der ersten Nullmarke (N1) am ersten Sensorsystem (S1) wir ein erster Impuls gebildet. Eine ortsfeste Sensoreinheit (ST) enthält weitere Sensorsysteme (S2,S3,S4), welche bei Vorbeilaufen des ersten Zahnkranzes (Z1) eine erste Impulskette, der zweiten Nullmarke einen zweiten Impuls und des zweiten Zahnkranzes (Z2) eine zweite Impulskette bilden. Eine Auswerteeinheit bestimmt die Lage der ruhenden Lastwelle (W) durch inkrementelles Auszählen der zweiten Impulskette zwischen dem zweiten und ersten Impuls. Eine Lageänderung der drehenden Lastwelle wird durch inkrementelles Auszählen der ersten Impulskette bestimmt.

## Beschreibung

Die Erfindung betrifft eine Vorrichtung zur Bestimmung der Winkellage einer Lastwelle.

Winkellagegeber sind meist in Form einer eigenständigen, kompakten Baueinheit ausgeführt. Diese ist in einem separaten, bevorzugt zylindrischen Gehäuse untergebracht, aus der eine sogenannte Geberwelle herausgeführt ist. Diese dient als eine mechanische Schnittstelle zwischen der Lastwelle und den durch die Geberwelle im Inneren des Gebers angetrieben Mitteln zur Winkellagebestimmung. Sie wird bei Montage des Winkellagegebers verdrehsicher mit der Lastwelle verbunden, deren aktuelle Winkellage bestimmt und überwacht werden soll. Eine derartige Bauform wird somit als "Anbaugeber" bezeichnet. Sie verfügt über eine äußerst kompakte Bauform und eignet sich besonders zur externen Montage an kompakten Geräten, z.B. Werkzeugmaschinen und Handhabungsautomaten. Dabei wird das aus dem Gehäuse herausragende Ende der Geberwelle mit einem herausgeführten, ungenutzten Ende einer in der Winkellage zu überwachenden Lastwelle verbunden. Vorraussetzung für die Montage von Anbaugebern ist somit in der Regel das Vorhandensein einer Lastwelle mit mindestens einem freien und zugänglichen Ende.

Gegenüber diesem Stand der Technik liegt der Erfindung die Aufgabe zugrunde, eine Vorrichtung zur Bestimmung der Winkellage einer Lastwelle anzugeben, welche bevorzugt in Form eines sogenannten "Einbaugebers" besser in das Innere einer die jeweilige Lastwelle aufweisenden Maschine integriert werden kann, so daß die Lastwelle nicht mehr zwingend ein zum Anschluß der Geberwelle des Winkellagegebers reserviertes, offenes und zugängliches Ende aufweisen muß.

Die Aufgabe wird gelöst mit der im Anspruch 1 angegebenen Vorrichtung. Vorteilhafte weitere Ausgestaltungen der Erfindung sind in den Unteransprüchen angegeben.

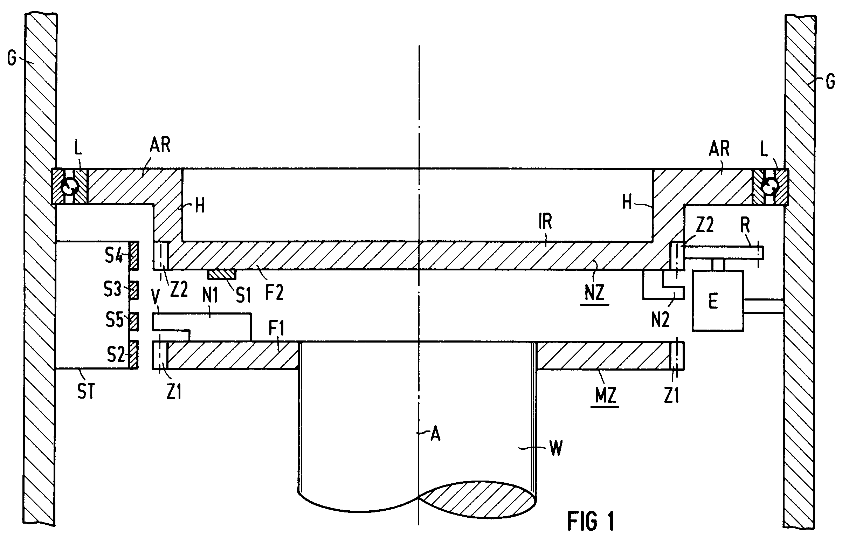

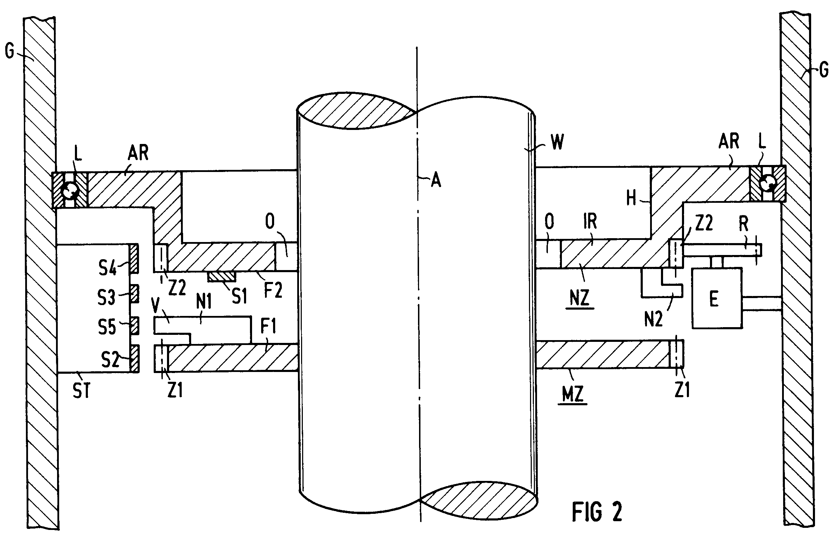

Die Erfindung wird desweiteren anhand von zwei, in den Figuren 1 und 2 dargestellten, bevorzugten Ausführungsbeispielen näher erläutert. Dabei ist die Ausführungsform im Beispiel der Figur 1 an das Ende einer Lastwelle angebracht, und die Ausführungsform im Beispiel der Figur 2 an einer beliebigen Stelle auf der Oberfläche einer beispielhaft als eine Hohlwelle ausgeführten Lastwelle.

Die erfindungsgemäße Vorrichtung weist im wesentlichen ein Meßzahnrad, ein Nachlaufzahnrad, eine ortsfeste Sensoreinheit und eine Auswerteeinheit auf. Entsprechend den in den Figuren 1 und 2 dargestellten Ausführungsbeispielen ist das Meßzahnrad MZ verdrehsicher mit der Lastwelle W verbunden und weist bevorzugt auf der radialen, nach außen gerichteten Umfangsfläche einen ersten Zahnkranz Z1 auf. Desweiteren ist erfindungsgemäß auf dem Meßzahnrad MZ eine erste Nullmarke N1 angebracht. Im Beispiel der Figuren 1, 2 besteht die Nullmarke N1 aus einem blockförmigen Körper, welcher auf einer Oberfläche F1 bevorzugt am Rand des Meßzahnrades MZ im Bereich des ersten Zahnkranzes Z1 angebracht ist.

Im Beispiel der Figuren 1, 2 sind die Lastwelle W und das Meßzahnrad MZ separat vorgefertigte Bauteile, welche anschließend fest miteinander verbunden werden. So kann das Meßzahnrad MZ bevorzugt durch Aufschrumpfen bzw. über eine Fassung verdrehsicher mit der Oberfläche der Lastwelle W verbunden werden.

Gemäß einer anderen, nicht dargestellten Ausführungsform können die Lastwelle W und das Meßzahnrad MZ auch als ein einteiliges Formstück ausgeführt sein. Dabei kann die als Meßzahnrad dienende Scheibe z.B. durch Ausdrehen bzw. Ausfräsen aus dem Material der Lastwelle herausgearbeitet sein. Gegenüber der verbleibenden Meßzahnradscheibe wird dabei der Rest der Lastwelle auf den jeweils gewünschten Durchmesser abgedreht. Eine weitere, ebenfalls nicht dargestellte Ausführungsform ergibt sich dann, wenn die Lastwelle über einen sehr großen Durchmesser verfügt. Dies ist insbesondere bei sogenannten Hohlwellen der Fall. Hierbei kann ein Ringsegment auf der Oberfläche der Lastwelle unmittelbar als Meßzahnrad ausgebildet werden. Dessen Zahnkranz kann auf einfache Weise beispielhaft durch Einfräsen von radialen Nuten in die Lastwellenoberfläche erzeugt werden.

Entsprechend dem Beispiel der Figuren 1, 2 weist die erfindungsgemäße Vorrichtung desweiteren ein Nachlaufzahnrad NZ auf, dessen Rotationsachse zwar in der Achse A der Lastwelle W liegt, gegenüber der Einheit aus Lastwelle W und Meßzahnrad MZ aber über einen Servoantrieb frei drehbar ist. Im Beispiel der Figuren ist das Nachlaufzahnrad NZ im Inneren einer feststehenden, zylindrisch ausgeführten Gehäusewandung G über ein Außenlager L drehbar gelagert.

Das in den Figuren 1, 2 dargestellte Nachlaufzahnrad NZ weist beispielhaft einen großen Außenring AR, eine Innenscheibe IR mit kleinerem Durchmesser und eine symmetrisch zur Rotationsachse A befindliche Übergangshülse H zur Verbindung von Außenring und Innenscheibe auf. Es entsteht somit im Schnitt eine an den radialen Enden gewinkelte Anordnung entsprechend der Darstellung in den Figuren. Das Nachlaufzahnrad NZ ist dabei über den Außenring AR und das Außenlager L im Inneren des Gehäuses G drehbar gelagert. Desweiteren ist auf der radialen Umfangsfläche der kleineren Innenscheibe IR bzw. der Übergangshülse A ein zweiter Zahnkranz Z2 angebracht. Bevorzugt verfügen das Meßzahnrad MZ und die Innenscheibe IR des Nachlaufzahnrades NZ über den gleichen Durchmesser, so daß die Zahnsummen der beiden Zahnkränze Z1, Z2 ebenfalls übereinstimmen.

In den Ausführungsbeispielen der Figuren 1, 2 besteht der Servoantrieb für das Nachlaufzahnrad NZ vorteilhaft aus einem Kleinelektromotor E, dessen Ritzel R in den zweiten Zahnkranz Z2 eingreift. Selbstverständlich sind auch beliebig andersartig ausgeführte Servoantriebe möglich. Insbesondere ist es denkbar, daß der Servoantrieb an einer anderen Stelle auf das Nachlaufzahnrad eingreift, so daß der zweite Zahnkranz Z2 mechanisch unbelastet und somit keinem Verschleiß ausgesetzt ist.

Erfindungsgemäß weist das Nachlaufzahnrad NZ desweiteren eine zweite Nullmarke N2 und ein bevorzugt um 180° demgegenüber versetztes erstes Sensorsystem S1 auf. Die zweite Nullmarke N2 ist dabei wiederum als ein blockförmiger Körper ausgebildet und bevorzugt auf der dem Meßzahnrad MZ zugewandten Oberfläche F2 inbesondere am radialen Randbereich der Innenscheibe IR im Bereich des zweiten Zahnkranzes Z2 angeordnet. Demgegenüber ist das erste Sensorsystem S1 auf der Oberfläche F2 radial versetzt und im Beispiel der Figuren 1, 2 diagonal gegenüberliegend angeordnet. Der radiale Abstand des Sensorsystems S1 von der Lastwellenachse A weist dabei annähernd die gleiche Größenordnung auf, wie der radiale Abstand der ersten Nullmarke N1. Die Nullmarke N1 und das Sensorsystem S1 sind somit in annähernd gegenuberliegenden Radialbahnen auf den einander zugewandten Oberflächen F1 bzw. F2 des Meßzahnrades MZ bzw. des Nachlaufzahnrades NZ angeordnet. Wird somit das Nachlaufzahnrad NZ durch Aktivierung des Servoantriebes E, R in Drehung versetzt, so wird das erste Sensorsystem S1 im Moment des Vorbeilaufens der gegenüberliegenden, ersten Nullmarke N1 auf der Oberfläche F1 des Meßzahnrades MZ aktiviert und bildet einen ersten Impuls.

Die erfindungsgemäße Vorrichtung weist desweiteren eine ortsfeste Sensoreinheit mit zumindest einem zweiten, dritten und vierten Sensorsystem auf. Im Beispiel der Figuren 1, 2 ist die Sensoreinheit ST auf der Innenseite der Gehäusewandung G angebracht und weist auf einer den Zahnkränzen Z1, Z2 des Meß- und Nachlaufzahnrades zugewandten Oberfläche zumindest die Sensorsysteme S2, S3 und S4 auf. Dabei wird das zweite Sensorsystem S2 vom Meßzahnrad MZ aktiviert, und bildet bei Drehung desselben aufgrund des Vorbeilaufens der Zähne des ersten Zahnkranzes Z1 eine erste Impulskette. Desweiteren wird das dritte Sensorsystem S3 von der zweiten Nullmarke N2 auf der Oberfläche F2 des Nachlaufzahnrades NZ aktiviert, und bildet bei dessen Drehung im Moment des Vorbeilaufens der zweiten Nullmarke N2 einen zweiten Impuls. Schließlich wird das vierte Sensorsystem S4 vom Nachlaufzahnrad NZ aktiviert, und bildet bei Drehung desselben aufgrund des Vorbeilaufens der Zähne des zweiten Zahnkranzes Z2 eine zweite Impulskette.

Schließlich weist die erfindungsgemäße Vorrichtung eine Auswerteeinheit auf, mit deren Hilfe die absolute Winkellage der Lastewelle W sowohl im Stillstand als auch bei Drehung erfaßt werden kann. Hierzu aktiviert und deaktiviert die Auswerteeinheit den Servoantrieb des Nachlaufzahnrades und wertet die von den einzelnen Sensorsystemen bereitgestellten Impulse bzw. Impulsketten aus. Die Funktionsweise der Auswerteeinheit wird nachfolgend im Detail geschrieben. Zunächst wird der erste Fall betrachtet, bei dem die erfindungsgemäße Vorrichtung die absolute Winkellage der still stehenden Lastwelle W zu bestimmen hat. Die Winkellage der Lastwelle wird dabei bevorzugt durch die unbekannte Position der ersten Nullmarke N1 auf der Oberfläche F1 des Meßzahnrades MZ vorgegeben. Zur Bestimmung dieser Position aktiviert die Auswerteeinheit zunächst den Servoantrieb E, R und setzt das Nachlaufzahnrad NZ in Bewegung. Aufgrund dieser Drehung wird die zweite Nullmarke N2 am dritten Sensorsystem S3 vorbeigeführt und im Moment von deren Vorbeilaufen der zweite Impuls erzeugt. Das Auftreten dieses Impulses wird von der Auswerteeinheit als ein Startsignal für die absolute Winkellagebestimmung der Lastwelle herangezogen. Ab dem Auftreten des zweiten Impulses wird die vom vierten Sensorsystem S4 aufgrund des Vorbeilaufens des zweiten Zahnkranzes Z2 des Nachlaufzahnrades NZ gebildete zweite Impulskette solange ausgezählt, bis das erste Sensorsystem S1 auf der Oberfläche F2 des Nachlaufzahnrades MZ die Winkellage der ersten Nullmarke N1 auf der Oberfläche F1 des still stehenden Meßzahnrades MZ erreicht hat. Die Auswerteeinheit beendet somit den inkrementellen Zählvorgang im Moment des Auftretens des ersten Impulses am Ausgang des ersten Sensorsystemes S1, und leitet aus dem jeweiligen Zählergebnis den Istwert der jeweiligen absoluten Winkellage der Lastwelle W ab. Der Servoantrieb kann nun wieder stillgesetzt werden.

Im zweiten Fall der Drehung der Lastwelle W ist die erfindungsgemäße Vorrichtung ebenfalls in der Lage, deren Winkellageänderung zu erfassen. Hierzu zählt die Auswerteeinheit die aufgrund des Vorbeilaufens des ersten Zahnkranzes Z1 des Meßzahnrades MZ am Ausgang des zweiten Sensorsystemes S2 gebildete zweite Impulskette. Mit Hilfe dieses zweiten inkrementellen Zählvorganges können somit auch dynamische Winkellageänderung einfach erfaßt werden.

Die erfindungsgemäße Vorrichtung weist den Vorteil auf, daß die absolute Winkellage einer still stehenden und/oder in Drehung befindlichen Lastwelle mit Hilfe von Meß- und Nachlaufzahnrad auf einfache Weise im wesentlichen durch zwei inkrementelle Zählvorgänge bestimmt werden kann. Es sind somit keine, z.B. auf der analogen Auswertung von einer Vielzahl z.B. mit Graukeilen belegten Spuren auf einer Geberscheibe bzw. auf der Abtastung von einer Vielzahl z.B. mit Kodierungen belegten Segmente bzw. Spuren auf einer Geberscheibe basierende Systeme zur absoluten Lagebestimmung notwendig. Die erfindungsgemäße Vorrichtung benötigt demgegenüber lediglich zwei, in Form der Zahnkränze Z1, Z2 auf den Zahnrädern MZ, NZ verkörperte Inkrementalspuren, und die von den Nullmarken N1, N2 herrührenden Impulse zur gegenseitigen Zuordnung.

Die erfindungsgemäße Vorrichtung zeichnet sich zudem durch das Fehlen einer separaten Geberwelle aus. Sie ist vielmehr direkt auf der entsprechenden Lastwelle anbringbar und somit problemlos in das Innere des die Lastwelle aufweisenden Gerätes integrierbar. Die erfindungsgemäße Vorrichtung kann somit in der Art eines "Einbaugebers" auch auf Antriebswellen mit großem Außendurchmesser angebracht werden. So ist bei dem in Figur 1 dargestellten Beispiel die erfindungsgemäße Vorrichtung in herkömmlicher Weise an einem Ende einer einseitig offenen Lastwelle W angebracht. Das Nachlaufzahnrad NZ deckt in diesem Fall das Wellenende vollständig ab. Demgegenüber weist das Nachlaufzahnrad NZ bei dem in Figur 2 dargestellten Ausführungsbeispiel eine zentrale Kernbohrung O auf. Hierdurch kann die Lastwelle berührungsfrei durch das Innere des Nachlaufzahnrades NZ hindurchgeführt werden. Dies ermöglicht eine Anbringung der erfindungsgemäßen Vorrichtung an einer beliebigen Stelle auf der Oberfläche der Lastwelle W. Die Vorrichtung ist somit noch besser an einer geeigneten Stelle in das Innere eines die Lastwelle enthaltenden Maschinengehäuses G integrierbar. Im Beispiel der Figur 2 ist die Lastwelle W zudem als eine Hohlwelle mit relativ großem Innendurchmesser ausgeführt. Durch das Innere derartiger Hohlwellen können z.B. elektrische Versorgungs- und Signalleitungen bzw. bei Bearbeitungsmaschinen auch Werkstücke oder Teile derselben ein- bzw. hindurchgeführt werden. Schließlich ist ein weiterer Vorteil der erfindungsgemäßen Vorrichtung darin zu sehen, daß die Winkellage der Lastwelle aufgrund von deren gleichzeitiger Funktion als Träger unmittelbar, d.h. ohne Zwischenschaltung einer separaten Geberwelle bzw. eines unter Umständen die Meßgenauigkeit beeinträchtigenden Getriebes, erfaßt wird.

Gemäß einer weiteren, in den Figuren 1, 2 bereits dargestellten Ausführungsform weist die ortsfeste Sensoreinheit ST ein zusätzliches, fünftes Sensorsystem S5 auf, welches bei Drehung des Meßzahnrades MZ im Moment des Vorbeilaufens der ersten Nullmarke N1 einen weiteren, dritten Impuls bildet. Hierzu verfügt die Nullmarke N1 bevorzugt über einen Vorsprung V, welcher auf den Rand des Meßzahnrades MZ gerichtet und somit dem gegenüberliegenden fünften Sensorsystem S5 zugewandt ist. Die Auswerteeinheit kann bei Drehung der Lastwelle W das ein- oder mehrfache Auftreten des dritten Impulses vorteilhaft zusätzlich zur Bestimmung der Anzahl ganzer Umdrehungen der Lastwelle heranziehen. Hierdurch kann die Genauigkeit der Bestimmung von über Vielfache ganzer Umdrehungen hinausgehende Winkellageänderungen der Lastwelle erhöht werden.

Entsprechend einer weiteren Ausführungsform der Erfindung können optische Mittel zum Aufbau der Sensorsysteme S1 bis S5 eingesetzt werden. Hierbei wird das Vorbeilaufen der jeweiligen Nullmarke N1, N2 bzw. der Zähne der jeweiligen Zahnkränze Z1, Z2 auf dem Wege optischer Abtastung ausgewertet. Die Sensorsysteme weisen dabei jeweils eine Lichtquelle zur Bestrahlung der Nullmarken und Zahnkränze und einen lichtempfindlichen Halbleiter auf, insbesondere Photodioden. Diese Photoempfänger werten die vom Vorbeilaufen der Nullmarken und Zahnkränze verursachten Reflektionsschwankungen des aufgestrahlten Lichtes aus, und leiten hieraus die beiden Impulse und die Impulsketten ab.

Gemäß einer weiteren, besonders vorteilhaften Ausführung der Erfindung sind die Sensorsysteme S1 bis S5 magnetfeldgesteuert ausgeführt. Dabei werden durch Vorbeilaufen der jeweiligen Nullmarken N1, N2 bzw. der Zähne der jeweiligen Zahnkränze Z1, Z2 hervorgerufene Schwankungen von magnetischen Flüssen detektiert und zur Bildung des ersten, zweiten Impulses bzw. der ersten, zweiten Impulskette herangezogen. Zur Erzeugung von auf das jeweilige Sensorsystem bezogenen magnetischen Flüssen ist es zum einen möglich, die Nullmarken und die Zähne der Zahnkränze so auszuführen, daß diese Quellen magntischer Flüsse darstellen. In diesem Fall sind die Nullmarken N1, N2 aus dauermagnetischem Material gefertigt, und die dazugehörigen Sensorsysteme S1, S3, S5 weisen magnetfeldabhängige Elemente auf, z.B. magnetfeldabhängige Feldplattenwiderstände bzw. Hallsensoren. Desweiteren können die Zähne der jeweiligen Zahnkränze Z1, Z2 ebenfalls aus dauermagnetischem Material gefertigt sein, so daß diese entlang des Umfanges des jeweiligen Zahnrades MZ, NZ magntische Flüsse mit abwechselndem Vorzeichen hervorrufen. Die dazugehörigen Sensorsysteme S2, S4 enthalten wiederum magnetfeldabhängige Elemente, z.B. sogenannte Magnetoresistoren.

Bei einer weiteren, besonders vorteilhaften Ausführungsform der Erfindung sind die zur Erzeugung eines magnetischen Flusses und die zur Detektion von impulsartigen Schwankungen desselben benötigten Mittel in Form einer kompakten Baueinheit im Inneren des jeweiligen Sensorsystemes zusammengefaßt. In diesem Fall bestehen die Nullmarken N1, N2 und zumindest die Zähne Z1, Z2 der Zahnräder MZ, NZ aus Materialien, welche zwar gute Leiter für den magnetischen Fluß darstellen, selbst aber möglichst nicht permanentmagnetisierbar sind. Bevorzugt sind in diesem Beispiel die ersten, dritten und fünften Sensorsysteme S1, S3, S5 in Form von sogenannten Einfachdifferentialfeldplattensystemen ausgebildet. Diese weisen jeweils mindestens einen Permanentmagneten und ein Paar von magnetfeldabhängigen Widerständen auf. Derartige Bauelemente werden z.B. von der Firma SIEMENS unter der Bezeichnung "differentialer magnetoresistiver Sensor FP 212 L 100-22" angeboten. Bevorzugt sind schließlich die zweiten und vierten Sensorsysteme S2, S4 der erfindungsgemäßen Vorrichtung als sogenannte Doppeldifferentialfeldplattensysteme ausgebildet. Diese weisen jeweils mindestens einen Magneten und zwei Paar von magnetfeldabhängigen Widerständen auf. Derartige Bauelemente werden ebenfalls von der Firma SIEMENS unter der Bezeichnung "Zweifach Differentialmagnetoresistor FP 410 L (4x80) FM" angeboten.

## Patentansprüche

1. Vorrichtung zur Bestimmung der Winkellage einer Lastwelle (W),
**gekennzeichnet durch**
a) ein Meßzahnrad (MZ) mit einem ersten Zahnkranz (Z1), welches
al) verdrehsicher mit der Lastwelle (W) verbunden ist,und
a2) eine erste Nullmarke (N1) aufweist,
b) ein Nachlaufzahnrad (NZ) mit einem zweiten Zahnkranz (Z2), welches
b1) in der Achse (A) der Lastwelle (W) liegend über einen Servoantrieb (E,R) frei drehbar ist, und
b2) eine zweite Nullmarke (N2) und ein bevorzugt um 180° versetztes erstes Sensorsystem (S1) aufweist, welches bei Drehung des Nachlaufzahnrades (NZ) im Moment des Vorbeilaufens der ersten Nullmarke (N1) einen ersten Impuls bildet,
c) eine ortsfeste Sensoreinheit (ST), mit
c1) einem zweiten Sensorsystem (S2), welches bei Drehung des Meßzahnrades (MZ) aufgrund des Vorbeilaufens des ersten Zahnkranzes (Z1) eine erste Impulskette bildet,
c2) einem dritten Sensorsystem (S3), welches bei Drehung des Nachlaufzahnrades (NZ) im Moment des Vorbeilaufens der zweiten Nullmarke (N2) einen zweiten Impuls bildet, und
c3) einem vierten Sensorsystem (S4), welches bei Drehung des Nachlaufzahnrades (NZ) aufgrund des Vorbeilaufens des zweiten Zahnkranzes (Z2) eine zweite Impulskette bildet, und durch
d) eine Auswerteeinheit, welche
d1) bei Stillstand der Lastwelle (W) den Servoantrieb (E,R) des Nachlaufzahnrades (NZ) aktiviert, ab dem Auftreten des zweiten Impulses vom dritten Sensorsystem (S3) die zweite Impulskette vom vierten Sensorsystem (S4) bis zum Auftreten des ersten Impulses vom ersten Sensorsystem (S1) auszählt und hieraus die absolute Winkellage der Lastwelle (W) bestimmt, und
d2) bei Drehung der Lastwelle (W) die erste Impulskette vom zweiten Sensorsystem (S2) auszählt und hieraus die Winkellageänderung der Lastwelle (W) bestimmt.

2. Vorrichtung nach Anspruch 1,
**dadurch gekennzeichnet,** daß
a) die ortsfeste Sensoreinheit (ST) ein fünftes Sensorsystem (S5) aufweist, welches bei Drehung des Meßzahnrades (MZ) im Moment des Vorbeilaufens der ersten Nullmarke (N1,V) einen dritten Impuls bildet, und
b) die Auswerteeinheit bei Drehung der Lastwelle (W) das Auftreten des dritten Impulses zusätzlich zur Bestimmung der Anzahl ganzer Umdrehungen der Lastwelle (W) heranzieht.

3. Vorrichtung nach Anspruch 1,
**dadurch gekennzeichnet,** daß das Nachlaufzahnrad (NZ) eine Kernbohrung (O) aufweist, durch welche die Lastwelle (W) berührungsfrei hindurchführbar ist (Fig.2).

4. Vorrichtung nach Anspruch 3,
**dadurch gekennzeichnet,** daß die Lastwelle (W) als Hohlwelle ausgebildet ist (Fig.2).

5. Vorrichtung nach einem der vorangegangenen Ansprüche,
**dadurch gekennzeichnet,** daß Lastwelle (W) und Meßzahnrad (MZ) ein einteiliges Formstück bilden, insbesondere daß ein Ringsegment der Oberfläche der Lastwelle (W) als Meßzahnrad (MZ) ausgebildet ist.

6. Vorrichtung nach einem der vorangegangenen Ansprüche,
**dadurch gekennzeichnet,** daß die Sensorsysteme (S1...S5) magnetfeldgesteuert ausgeführt sind, und durch Vorbeilaufen der jeweiligen Nullmarke (N1,N2) bzw. des Zahnkranzes (Z1,Z2) hervorgerufene Schwankungen von magnetischen Flüssen detektiert und zur Bildung des jeweiligen Impulses bzw. der Impulskette herangezogen werden.

7. Vorrichtung nach Anspruch 6,
**dadurch gekennzeichnet,** daß
a) die Nullmarken (N1,N2) magnetische Flüsse hervorrufen, welche bei deren Vorbeilaufen an den entsprechenden Sensorsystemen (S1,S3,S5) detektiert werden, und
b) die Zähne der jeweiligen Zahnkränze (Z1,Z2) entlang des Umfanges des jeweiligen Zahnrades (MZ,NZ) magnetische Flüsse mit abwechselnden Vorzeichen hervorrufen, welche bei Vorbeilaufen der Zahnkränze (Z1,Z2) an den entsprechenden Sensorsystemen (S2,S4) detektiert werden.

8. Vorrichtung nach Anspruch 6,
**dadurch gekennzeichnet,** daß
a) die Nullmarken (N1,N2) und zumindest die Zahnkränze (Z1,Z2) der Zahnräder (MZ,NZ) aus möglichst nicht permanentmagnetisierbaren Materialien bestehen,
b) die ersten, dritten und fünften Sensorsysteme (S1,S3,S5) als Differentialfeldplattensysteme ausgebildet sind, welche jeweils einen Magneten und ein Paar von magnetfeldabhängigen Widerständen aufweisen, und
c) die zweiten und vierten Sensorsysteme (S2,S4) als Doppeldifferentialfeldplattensysteme ausgebildet sind, welche jeweils einen Magneten und zwei Paar von magnetfeldabhängigen Widerständen aufweisen.
